# EUROPEAN PATENT APPLICATION

(11) **EP 3 903 567 A1**
(43) Date of publication of application: **03.11.2021**
(21) Application number: 19904926.3
(22) Date of filing: 26.02.2019
(51) Int. Cl.: A01G 7/04, A01G 9/18, A01G 9/24

(54) **PLANT FACTORY**

(30) Priority: 27.12.2018 CN 201811615450
(71) Applicant: Huizhou Conet Harness Co., Ltd, Huizhou, Guangdong 516000 (CN)
(72) Inventor: LEI, Yi Yang, Huizhou, Guangdong 516000 (CN)
(74) Representative: Spittle, Mark Charles
(86) International application number: PCT/CN2019/076097
(87) International publication number: WO 2020/133669

(57) **Abstract**

A plant factory includes a culture room, a lighting assembly, a CO₂ concentration generation controlling module, an air conditioning module, a nutrient supplying module and a controlling module. The plant factory controls the lighting assembly to meet the lighting requirement of the different types of plants at each growth stage and the different types of plants at each growth stage are in the optimal growth state and grow in a predetermined manner of meeting the corresponding growth schemes. The plant factory improves planting efficiency and realizes lean production to achieve the zero inventory target meeting plant production characteristics.

## Description

### FIELD OF THE INVENTION

The present invention relates to modern agricultural planting field, more particularly, to a plant factory.

### BACKGROUND OF THE INVENTION

Plant factory, as an important producing way of fruits and vegetables, grains and saplings in the future, has received wide attention. With the continuous progresses of related technologies, the innovations from multiple angles continuously promote the development and the improvement of the plant factory.

Currently, the production systems of the plant factory in the world are divided into three types according to the different light sources, which are a natural light utilization type, an artificial light utilization type and a natural light-artificial light mixed utilization type. The natural light utilization type of the plant factory uses natural light, the workshop is a large glass greenhouse or a plastic greenhouse which indoor is equipped with a monitoring and controlling equipment of various environmental factors. This type of the plant factory is somewhat affected by the natural condition, and the types of planting plants are somewhat limited thereof, the biggest problem therein is how to achieve a low cost and a low energy consumption for cooling in the summer and warming in the winter. The artificial light utilization type of the plant factory regulates light to meet lighting requirements of corresponding plants. The natural light-artificial light mixed utilization type of the plant factory uses natural light and uses plant supplementary lamps to light plants on cloudy days or at night. Because of using the natural light, the cost of the natural light-artificial light mixed utilization type of the plant factory is cheaper than that of the artificial light utilization type of the plant factory. And because of using the natural light, the natural light-artificial light mixed utilization type of the plant factory can provide faster production efficiency than the artificial light utilization type of the plant factory can. However, as the natural light-artificial light mixed utilization type of the plant factory needs the natural light shoot into a workshop, most of which are also large glasshouses or even plastic greenhouses. There are also the same problems as the natural light utilization type of the plant factory, such as, limited in the types of planting plants, low space utilization, high cost for cooling in the summer and warming in the winter, etc.. In order to achieve continuous production throughout a year, supplying off-season green vegetables, planting multi-types of plants and large space utilization rate, currently it is more inclined to use artificial light in the artificial light utilization type of the plant factory to realize the lighting requirements of the types of plants. Currently, the size of the plant factory is small, and the manufacturers and the users of the plant factory are concerned about how to accelerate plant growth under low cost conditions. That is, how to maintain the corresponding plants at the best growth states with the most suitable conditions.

For example, Chinese Patent CN203206878U discloses a kind of micro plant factory controlled by an intelligent controlling system, which includes an automatic proportioning system of nutrient liquid and a plant incubator, which are communicated with pipes. The automatic proportioning system of nutrient liquid and the plant incubator are connected with a controller. The plant incubator includes a plant culture substrate and a supplementary lamp. The nutrient liquid is produced by the automatic proportioning system with high precision and provides various nutrients required for plant growth. Environment factors (such as temperature, humidity, light intensity, CO₂ concentration), a pH value and an EC value of the nutrient liquid in the plant incubator are collected by corresponding sensors. The collected simulated signals are monitored in real time by a controller PLC, which regulates the temperature, the humidity, the light intensity, the CO₂ concentration, and the nutrient solution parameters in the plant incubator to make them the most suitable for plant growth.

However, different types of plants have different light requirements, and each of growth stages also needs different lights, therefore, the current technologies of the plant factory have a lot of shortcomings, such as,
1) It does not meet the lighting requirements of various of plants at different growth stages.
2) It does not provide real-time adjustment of the illumination.

Therefore, it is urgent to provide a plant factory which can resolve the above mentioned shortcomings, and can maintain the various types of plants at the best growth state so as to improve the efficiency of planting plant.

### SUMMARY OF THE INVENTION

For overcoming the deficiencies of the prior art, the present invention provides a plant factory to solve the technical problems so as to meet the lighting requirements for different growth stages of different types of plants and provide real-time adjustment of illumination.

A plant factory, characterized by including: a culture room, which is divided into multiple planting areas according to various types of the plants; a lighting assembly to provide variable lighting conditions to the plant factory; a CO₂ concentration generation controlling module to control CO₂ concentration in the plant factory; an air conditioning module for controlling of the temperature and the humidity in the plant factory; a nutrient supplying module for providing the nourishment to the plant factory; a controlling module for controlling the lighting assembly, the CO₂ concentration generation control module, the air conditioning module and the nutrient supplying module, according to the types of plants planted in each of the planting areas in the plant factory, the controlling module provides a controlled illumination, the CO₂ concentration, the temperature, the humidity, and the nourishment which affect the growth of the plants respectively .

In order for that the types of plants in the planting area fully accept the illumination of the lighting assembly and is not disturbed by external sunlight, the culture room needs to be set as a closed-sterile-dark chamber.

The lighting assembly includes a light driving module, lighting elements, a monitoring module and a light intensity sensing module; the light driving module is connected with the lighting elements; the light driving module, the monitoring module and the light intensity sensing module is connected with the controlling module; the lighting elements are provided with a plurality of LED lights at different wavelengths which are corresponding to the lighting requirements of the growth stages of different types of plants, the LED lights are arranged above the planting areas respectively, the light driving module is set in a way of independently powering for each of the LED lights respectively; the controlling module is configured with growth schemes according to the different types of plants, judges a currently growth stage of the plant respectively by calculating time and images transmitted by the monitoring module, thus correspondingly adjust the wavelengths of the LED lights to response to the current adjusted by the light driving module, thus forming a light environment for the plant growth in the corresponding planting areas. The controlling module controls the lighting driving module to regulate the lighting elements according to the daily real-time lighting intensity sensed by the lighting intensity sensing module, and determines whether the current lighting intensity meets the preset value required for the plant growth. Staff can also observe the growth state of the plants through the monitoring module and judge whether the current growth state of the plants matches the light provided now. If not, it can be regulated by the controlling module.

Preferably, all of the LED lights emit red light at a wavelength range of 610nm-720nm.

Preferably, all of the LED lights emit blue light at a wavelength range of 400nm-520nm.

Preferably, all of the LED lights emit red and blue mixed light with the red and blue light chromatography ranges from 5: 1-10: 1.

The CO₂ concentration generation control module includes a CO₂ concentration monitor and a CO₂ generator; the CO₂ concentration monitor and the CO₂ generator are provided in each of the planting areas of the plant factory respectively; after the controlling module applies the corresponding growth schemes, the controlling module adjusts the CO₂ concentration generation control module to produce a CO₂ concentration corresponding to the different plants, and collects and detects the CO₂ concentration in the planting areas through the CO₂ concentration monitor. When the controller module detects that the CO₂ concentration in the planting areas is insufficient required for the plants, the controlling module controls the CO₂ generator to automatically run to generate CO₂; when the control module detects that the CO₂ concentration reaches the preset value, the controlling module controls the CO₂ generator to automatically turn off.

The air conditioning module includes a temperature sensing unit, an humidity sensing unit and an air conditioning device; each of the planting areas of the plant factory are respectively provided with the temperature sensing unit, the humidity sensing unit and the air conditioning device; after the controlling module applies the corresponding growth schemes, the controlling module adjusts the air conditional module to generate a temperate and an humility corresponding to the different plants, and the real-time lighting intensity in the planting areas is sensed by the light intensity sensing unit of the lighting assembly, the real-time temperature in the planting area is sensed by the temperature sensing unit and the real-time humidity in the planting area is sensed by the humidity sensing unit, the controlling module controls the air conditioning device in the air conditioning module so as to generate a temperature and an humility corresponding to the different plants according to the real-time lighting intensity, the real-time temperature, the real-time humidity in the planting areas.

The interior of the plant factory is provided with at least one planting platforms, each planting platform contains at least two planting areas therein, the at least two planting areas are interval set in the vertical direction in the manner in which the corresponding types of plants can be planted.

By combining with the growth scheme of different types of plants and adjusting by controlling the light assembly in the present invention, the light assembly emits a wavelength corresponding to the corresponding types of plants at different growth stages, so that the corresponding light requirement of the different types of plants at each growth stage are met, therefore the plants are in the optimal growth state at each of the growth stages and grow in a predetermined manner of meeting the corresponding growth scheme, the corresponding types of plants achieve the growth target set manually or automatically to the plant factory. The plant factory according to the present invention improves the planting efficiency and makes the lean production in plant factory to be realized, therefore achieves the zero-stock target to meet the peculiarity of the plant factory.

### BRIEF DESCRIPTION OF THE DRAWINGS

FIG. 1 is a schematic diagram of a preferred embodiment of the plant factory according to the present invention;
FIG. 2 is a module schematic diagram of a preferred embodiment of a plant factory according to the present invention.

### EMBODIMENTS

The follow will detailed explain the plant factory according to the present intention combined with the Figures.

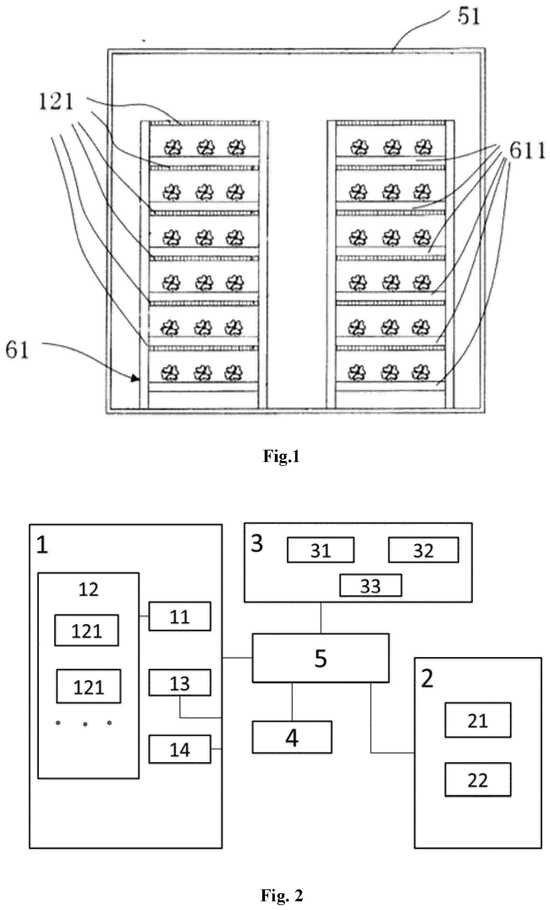

Figs. 1 and 2 show the plant factory according to the present convention.

According to a preferred embodiment in the present invention, referring to Fig. 1 and Fig. 2, the present invention discloses a plant factory, which includes a culture room 51, a lighting assembly 1, a CO₂ concentration generation controlling module 2, an air conditioning module 3, a nutrient supplying module 4 and a controlling module 5. The controlling module 5 is configured with the growth schemes in a manner corresponding to the types of plants. The controlling module 5 can control the lighting assembly 1, the CO₂ concentration generation controlling module 2, the air conditioning module 3 and the nutrient supplying module 4 to correspondingly adjust according to the growth schemes. After the adjustment, the corresponding types of plants in the plant factory grow in a predetermined manner consistent with the corresponding growth schemes. In this way, the corresponding types of plants can achieve the growth target set manually or automatically for the plant factory. Preferably, the controlling module 5 can be a smart computer. A variable lighting condition refers to that the light conditions can be adjusted according to the growth schemes.

Preferably, the light assembly 1 includes a light driving module 11, lighting elements 12, a light intensity sensing module 13 and a monitoring module 14. The light intensity sensing module 13 and the monitoring module 14 and the light driving module 11 are connected to the controlling module 5. The light driving module 11 is connected to the lighting elements 12, which can be used for providing variable lighting conditions for the plant factory.

Preferably, the CO₂ concentration generation controlling module 2 includes a CO₂ concentration monitor 21 and a CO₂ generator 22, which is used for monitoring and controlling the CO₂ concentration in the plant factory.

Preferably, the air conditioning module 3 includes a light intensity sensing unit 31, a temperature sensing unit 32, a humidity sensing unit 33 and an air conditioning device 34. The air conditioning module 3 is used for controlling the temperature and the humidity in the plant factory.

Preferably, the nutrient supplying module 4 is used for providing nourishment for the plant factory.

In a preferred embodiment according to the present invention, the plants in the plant factory are cabbage and celery. The culture room 51 is set as a closed-sterile-dark chamber. The culture room 51 is divided into multiple planting areas 611 according to the two types of plants.

In a preferred embodiment according to the present invention, the light assembly 12 is provided with a plurality of LED lights 121 at different wavelengths, and the different wavelengths are corresponding to the lighting requirements of the different types of plants. The LED lights 121 are arranged above each of the planting areas 611. The light driving module 11 is set in a manner to independently power each of the LED lights 121. After the controlling module 5 is configured with corresponding growth schemes of the cabbage and the celery respectively, the wavelengths of the LED lights 121 corresponding to the cabbage and the celery at each growth stage are obtained. The controlling module 5 determines the growth stages of the cabbage and the celery through a time calculation and images transmitted by the monitoring module, so that it can adjust the wavelengths of the LED lights 121 to response the current adjusted by the light driving module 11 so as to generate a controlled lighting environment for the cabbage and the celery grown in the corresponding planting areas. The controlling module 5 also determines whether the current light (the daily real-time light) intensity induced by the light intensity sensing module 13 meets the preset value required by plant growth, thus controls the light driving module 11 to adjust the light element 12 to reach the preset value.

Staffs also can observe the growth stages of the cabbage and the celery by the monitoring module 14 and judge whether the current growth stage of the cabbage and the celery matches the light provided now, if not, it can be adjusted by the controlling module 11.

In a preferred embodiment according to the present invention, the CO₂ concentration monitor and the CO₂ generator are provided in each of the planting areas of the plant factory respectively. After the controlling module 5 applies the corresponding growth schemes of the cabbage and the celery, the controlling module 5 regulates the CO₂ concentration generation controlling module to generate the CO₂ concentration corresponding to the cabbage and the celery, and the CO₂ concentration in the planting areas can be collected and detected by the CO₂ concentration monitor 21. The controlling module 5 controls the CO₂ production according to the information collected and detected by the CO₂ concentration monitor 21. When the CO₂ concentration monitor 21 detects that the CO₂ concentrations in the planting areas are insufficient for the requirement by the cabbage and the celery, the control module 5 controls the CO₂ generator to automatically operate to produce the CO₂, when the control module detects that the CO₂ concentration in the planting areas reaches the set value, the controlling module controls the CO₂ generator to automatically turn off.

In a preferred embodiment according to the present invention, each of the planting areas in the plant factory is provided with the temperature sensing unit 31, the humidity sensing unit 32 and the air conditioning device 34. After the controlling module 5 applies the growth schemes corresponding to the cabbage and the celery, the controlling module 5 regulates the air conditioning module 3 to produce the temperatures and the humidifies corresponding to the cabbage and the celerity, and the light intensity sensing unit 31 senses the real-time lighting intensities in the planting areas of the cabbage and the celery, the temperature sensing unit 32 senses the real-time temperatures in the planting areas of the cabbage and the celery, and the humidity sensing unit 33 senses the real-time humidifies in the planting areas of the cabbage and the celery. The controlling module 5 controls the air conditioning device 34 of the air conditioning module 3 to produce the temperatures and the humidifies corresponding to the cabbage and the celery according to the real-time lighting intensities, the real-time temperatures and the real-time humidifies in the planting areas of the cabbage and the celery.

In a preferred embodiment according to the present invention, referring to Fig. 1, the plant factory may be provided with two planting platforms 61. The two planting platforms 61 are further divided into 12 planting areas 611 as shown. The 12 planting areas 611 may be internally set in a vertical direction in a manner that the corresponding types of plants can be planted.

The plant factory in the present invention can change the growth scheme combined with the acquired limiting information, and used to control the lighting assembly 1, the CO₂ concentration generation controlling module, the air conditioning module 3 and the nutrient supplying module 4 to adjust accordingly so that the corresponding types of plants in the plant factory reach the growth target set manually or automatically to the plant factory. The plant factory realizes lean production to achieve the zero inventory objections meeting the production characteristics of the plant factory.

It is to be noted that the above specific embodiments are exemplary, and those skilled in the art may come up with various solutions inspired by the disclosure content of the invention, and these solutions all fall within the disclosure scope of the invention and fall within the protection scope of the invention. Those skilled in the art should understand that the invention and the drawings are illustrative rather than constitute a limitation on the claim. The scope of protection of the present invention is defined by claims and equivalent thereof.

## Claims

1. A plant factory, comprising:
a culture room, divided into multiple planting areas according to various types of plants;
a lighting assembly, used to provide variable lighting conditions to said plant factory;
a CO₂ concentration generation controlling module, used to control CO₂ concentration in said plant factory;
an air conditioning module, used for controlling of a temperature and a humidity in said plant factory;
a nutrient supplying module, used for providing nourishment to said plant factory; and,
a controlling module, which is connected respectively with and controls hereof said lighting assembly, said CO₂ concentration generation control module, said air conditioning module and said nutrient supplying module to provide controlled said illumination, said CO₂ concentration, said temperature, said humidity, and said nourishment according to said types of plants planted in each of said planting areas in said plant factory; said lighting assembly, said CO₂ concentration generation control module, said air conditioning module, said nutrient supplying module and said controlling module are arranged in each of said planting areas in said culture room;
wherein, said culture room is a closed-sterile-dark chamber; said lighting assembly can provide with light at different wavelengths and real-time monitor light intensity; said control module is configured with corresponding growth schemes according to said types of plants, automatically adjust said light assembly according to said corresponding growth schemes to provide said lights with different wavelengths for meeting light requirements for said different types of plants at each growth stage, at the same time, a staff can manually adjust said lighting assembly by said controlling module to match said lighting requirements of each of said growth stages of said different plants according to their own observation.

2. The plant factory according to claim 1, wherein said light assembly includes a light driving module, lighting elements, a light intensity sensing module and a monitoring module; said light driving module, said monitoring module and said light intensity sensing module are connected with said controlling module; said light driving module is connected with said lighting elements; said controlling module outputs a control signal to said light driving module according to said corresponding growth schemes for said types of plants, said light driving module drives said lighting elements corresponding to wavelengths for said different types of plants at each growth stage to operate according to said control signal; said controlling module judges whether said light intensity in said planting areas in said culture room meets current light requirements of said types of plants in said planting areas according to said light intensity real-time sensed by said light intensity sensing module in said planting areas in said culture room; then said controlling module sends said control signal based on a judgment result to said light driving module to adjust said light elements.

3. The plant factory according to claim 2, wherein said lighting elements are provided with a plurality of LED lights at different wavelengths corresponding to said lighting requirements of each of said growth stages of said different types of plants, said LED lights are arranged above said planting areas, said light driving module are set in a way of independent powering for each of said LED lights; said LED lights response to a current adjusted by said light driving module, thus forms a controlled lighting environment for plant growth in said corresponding planting areas.

4. The plant factory according to claim 3, wherein said controlling module is configured with said corresponding growth schemes and obtain said wavelength of said LED lights corresponding to said types of plants in each of said growth stages, said controlling module determines said growth stages of said types of plants at present by calculating time and images transmitted by said monitoring module, thus adjust said corresponding wavelength of said LED lights in response to a current adjusted by said light driving module, thus forms a controlled light environment for plant growth in said corresponding planting areas.

5. The plant factory according to claim 3 or claim 4, wherein said staff can observe said growth state of said plants through said monitoring module, and judge whether said current growth state of said plants matches said light provided now, if not, said corresponding LED can be driven to run by manually to adjust said light driving module through said controlling module.

6. The plant factory according to claim 3 or claim 4, wherein all of said LED lights emit red light at a wavelength range of 610nm-720nm.

7. The plant factory according to claim 3 or claim 4, wherein all of said LED lights emit blue light at a wavelength range of 400nm-520nm.

8. The plant factory according to claim 3 or claim 4, wherein all of the LED lights emit red and blue mixed light with red and blue light chromatography ranges from 5: 1-10: 1.

9. The plant factory according to any of claim 1-4, wherein said controlling module is a dedicated controller or a smart computer; said monitoring module is a surveillance camera.

10. The plant factory according to claim 9, wherein an interior of said plant factory is provided with at least one planting platforms, each platform contains at least two planting areas, said at least two planting areas are interval set in a vertical direction in a way said corresponding types of plants can be planted.

## Amended claims

### Amended claims under Art. 19.1 PCT

1. A plant factory, comprising:
a culture room, divided into multiple planting areas according to various types of plants;
a lighting assembly, used to provide variable lighting conditions to said plant factory;
a CO₂ concentration generation controlling module, used to control CO₂ concentration in said plant factory;
an air conditioning module, used for controlling of a temperature and a humidity in said plant factory;
a nutrient supplying module, used for providing nourishment to said plant factory; and,
a controlling module, which is connected respectively with and controls hereof said lighting assembly, said CO₂ concentration generation control module, said air conditioning module and said nutrient supplying module to provide controlled said illumination, said CO₂ concentration, said temperature, said humidity, and said nourishment according to said types of plants planted in each of said planting areas in said plant factory; said lighting assembly, said CO₂ concentration generation control module, said air conditioning module, said nutrient supplying module and said controlling module are arranged in each of said planting areas in said culture room;
wherein, said culture room is a closed-sterile-dark chamber; said lighting assembly can provide with light at different wavelengths and real-time monitor light intensity; said control module is configured with corresponding growth schemes according to said types of plants, automatically adjust said light assembly according to said corresponding growth schemes to provide said lights with different wavelengths for meeting light requirements for said different types of plants at each growth stage, at the same time, a staff can manually adjust said lighting assembly by said controlling module to match said lighting requirements of each of said growth stages of said different plants according to their own observation;
said light assembly includes a light driving module, lighting elements, a light intensity sensing module and a monitoring module; said light driving module, said monitoring module and said light intensity sensing module are connected with said controlling module; said light driving module is connected with said lighting elements; said controlling module outputs a control signal to said light driving module according to said corresponding growth schemes for said types of plants, said light driving module drives said lighting elements corresponding to wavelengths for said different types of plants at each growth stage to operate according to said control signal; said controlling module judges whether said light intensity in said planting areas in said culture room meets current light requirements of said types of plants in said planting areas according to said light intensity real-time sensed by said light intensity sensing module in said planting areas in said culture room; then said controlling module sends said control signal based on a judgment result to said light driving module to adjust said light elements.

2. The plant factory according to claim 1, wherein said lighting elements are provided with a plurality of LED lights at different wavelengths corresponding to said lighting requirements of each of said growth stages of said different types of plants, said LED lights are arranged above said planting areas, said light driving module are set in a way of independent powering for each of said LED lights; said LED lights response to a current adjusted by said light driving module, thus forms a controlled lighting environment for plant growth in said corresponding planting areas.

3. The plant factory according to claim 2, wherein said controlling module is configured with said corresponding growth schemes and obtain said wavelength of said LED lights corresponding to said types of plants in each of said growth stages, said controlling module determines said growth stages of said types of plants at present by calculating time and images transmitted by said monitoring module, thus adjust said corresponding wavelength of said LED lights in response to a current adjusted by said light driving module, thus forms a controlled light environment for plant growth in said corresponding planting areas.

4. The plant factory according to claim 2 or claim 3, wherein said staff can observe said growth state of said plants through said monitoring module, and judge whether said current growth state of said plants matches said light provided now, if not, said corresponding LED can be driven to run by manually to adjust said light driving module through said controlling module.

5. The plant factory according to claim 2 or claim 3, wherein all of said LED lights emit red light at a wavelength range of 610nm-720nm.

6. The plant factory according to claim 2 or claim 3, wherein all of said LED lights emit blue light at a wavelength range of 400nm-520nm.

7. The plant factory according to claim 2 or claim 3, wherein all of the LED lights emit red and blue mixed light with red and blue light chromatography ranges from 5: 1-10: 1.

8. The plant factory according to any of claim 1-3, wherein said controlling module is a dedicated controller or a smart computer; said monitoring module is a surveillance camera.

9. The plant factory according to claim 8, wherein an interior of said plant factory is provided with at least one planting platforms, each platform contains at least two planting areas, said at least two planting areas are interval set in a vertical direction in a way said corresponding types of plants can be planted.
